# EUROPÄISCHE PATENTANMELDUNG

(11) **EP 1 918 691 A1**
(43) Veröffentlichungstag der Anmeldung: **07.05.2008**
(21) Anmeldenummer: 07015746.6
(22) Anmeldetag: 10.08.2007
(51) Int. Cl.: G01N 9/24, G01N 23/16

(54) **Vorrichtung zum Prüfen eines flächigen Materials durch Transmission von Röntgenstrahlen, wobei das den einfallenden fächerförmigen Röntgenstrahl umgebende Gehäuse zur Reduzierung der Strahlungsabsorption mit Helium gefüllt ist**

(30) Priorität: 27.10.2006 DE 102006050839
(71) Anmelder: FAGUS-GRECON GRETEN GMBH & CO. KG, 31061 Alfeld (DE)
(72) Erfinder: Bergmann, Bernd, 30900 Wedemark (DE); Wienchowski, Detlev, 31863 Bisperode (DE); Palm, Klaus, 31073 Grünenplan (DE)
(74) Vertreter: Jabbusch, Matthias

(57) **Zusammenfassung**

Bei einer Vorrichtung zum Prüfen eines flächigen Materials mit Hilfe zumindest einer Strahlenquelle, wobei sich Material und Strahlenquelle relativ zueinander bewegen und wobei der Strahlenquelle ein Strahlendetektor zugeordnet ist, und wobei die Strahlenquelle und der Strahlendetektor auf einander gegenüberliegenden Seiten bezüglich des Materials angeordnet sind, die Strahlenquelle eine Strahlung in Form eines Strahlenfächers aussendet und der Strahlendetektor zeilenförmig ausgebildet ist, ist vorgesehen, daß für den Strahlenfächer ein sich in Richtung des Strahlendetektors verbreiterndes Gehäuse vorgesehen ist und daß das Gehäuse mit einem für die Strahlung transparentem Gas, wie z.B. Helium, gasdicht gefüllt ist.

## Beschreibung

Die Erfindung betrifft eine Vorrichtung zum Prüfen eines flächigen Materials mit Hilfe zumindest einer Strahlenquelle, wobei sich Material und Strahlenquelle relativ zueinander bewegen und wobei der Strahlenquelle ein Strahlendetektor zugeordnet ist und wobei die Strahlenquelle und der Strahlendetektor auf einander gegenüberliegenden Seiten bezüglich des Materials angeordnet sind, die Strahlenquelle eine Strahlung in Form eines Strahlenfächers aussendet und der Strahlendetektor zeilenförmig ausgebildet ist.

Flächige Materialien werden zu verschiedenen Zwecken eingesetzt. Sie sind als Plattenmaterialien Bauelemente zum Beispiel für Möbel, für Leichtbauwände und dergleichen. Folien werden zum Beispiel für Verpackungen verwendet. Voraussetzung für einen Einsatz eines flächigen Materials ist häufig eine gleichmäßige Ausbildung dieses Materials. So ist häufig sicher zu stellen, daß das Material in jedem Bereich seiner flächigen Erstreckung eine gleiche Dichte aufweist.

Insbesondere bei der Herstellung von Plattenmaterialien oder Kunststoffolien besteht darüber hinaus das Erfordernis, vor der endgültigen Fertigstellung des Materials dahingehend sicher zu sein, daß das Material keine Einschlüsse von Bereichen enthalten, welche nachfolgende Bearbeitungsgeräte oder das Material selbst beschädigen können. Bei der Fertigung von Holzspanplatten sind zum Beispiel Bereiche zu meiden, in denen die Dichte des Plattenmaterials bereits so hoch ist, das nachfolgende Pressen das Plattenmaterial nicht weiter verdichten können und dadurch beschädigt werden können. Bei Folien sind Fehlstellen zu vermeiden, die zu einem Reißen der Folie führen können.

Vorrichtungen der eingangs genannten Gattungen sind bekannt. Das Prüfen eines Materials kann mit Hilfe von Strahlenquellen erfolgen, mit welchen das Material durchleuchtet bzw. durchstrahlt wird. Die hindurchtretenden Strahlen werden von Strahlendetektoren aufgenommen und weiterverarbeitet. Beim Stand der Technik ist es dabei häufig erforderlich, mehrere Strahlenquellen einzusetzen und in einem bestimmten Winkel zueinander anzuordnen. Unter Berücksichtigung der hergestellten Winkelverhältnisse wird dann versucht, die gewünschten Meßergebnisse durch komplizierte Rechnungen zu erhalten. Eine derartige Vorrichtung ist aus der DE 101 60 398 B4 bekannt.

Der Erfindung liegt die Aufgabe zugrunde, eine Vorrichtung der eingangs genannten Gattung aufzuzeigen, mit der in einfacher Weise eine Prüfung des Materials erfolgen kann.

Diese Aufgabe ist erfindungsgemäß dadurch gelöst, daß für den Strahlenfächer ein sich in Richtung des Strahlendetektors verbreiterndes Gehäuse vorgesehen ist und daß das Gehäuse mit einem für die Strahlung transparenten Gas gasdicht gefüllt ist.

Die erfindungsgemäße Vorrichtung kann mit nur einer Strahlenquelle und mit nur einem Strahlendetektor eingesetzt werden. Diese beiden Bauteile werden einander derart zugeordnet, daß von der Strahlenquelle ausgesandte Strahlen das Material durchdringen und dann von dem Strahlendetektor aufgefangen werden. Erfindungsgemäß ist vorgesehen, daß für den Strahlenfächer ein sich in Richtung des Strahlendetektors verbreiterndes Gehäuse bereitgestellt ist. Die ausgesandte Strahlung wird damit in einem Gehäuse geführt, so daß sie einerseits keine Verstrahlung in der Umgebung hervorrufen kann.

Bei der Überprüfung von Folienmaterialien mit einer niederenergetischen Strahlung hat sich gezeigt, daß eine Luftsäule zwischen Strahlenquelle und Strahlendetektor einen starken verfälschenden Einfluß auf die Messung ausübt. Die Absorption der niederenergetischen Strahlung durch eine Luftsäule ist bei einem Abstand größer als einem Meter zwischen Strahlenquelle und Detektor größer als die Absorption des zu messenden Folienwerkstoffes.

Um diese Absorption auszuschließen, ist erfindungsgemäß vorgesehen, daß das Gehäuse mit einem für die Strahlung transparenten Gas gasdicht gefüllt ist. Die Strahlung kann durch dieses Gasmedium hindurchtreten, ohne daß Strahlungsanteile im nennenswerten Umfange absorbiert werden. Dadurch wird eine genaue Messung insbesondere bei Folien zum Beispiel aus Kunststoff gewährleistet.

Nach einer ersten Weiterbildung der Erfindung ist vorgesehen, daß das Gehäuse mit Helium gefüllt ist. Helium ist für eine niederenergetische Strahlung, beispielsweise für eine Röntgenstrahlung, transparent. Dadurch wird das Meßergebnis insbesondere bei dünnen Folien nicht verfälscht.

Damit das Helium im Gehäuse verbleibt, zugleich aber ein Eintritt und Austritt der Strahlung in das bzw. aus dem Gehäuse möglich ist, sieht eine Weiterbildung der Erfindung vor, daß ein Eintritt und/oder ein Austritt des Gehäuses versiegelt sind beziehungsweise ist. Die Versiegelung dieser Öffnungen des Gehäuses kann vorzugsweise mit einem Folienmaterial erfolgen, das gleichfalls für die Strahlung transparent ist. Die Folie wird vorzugsweise dünn ausgeführt.

Strahlung und Strahlendetektor haben jeweils zeilenförmige Ausbildungen. Die Strahlenquelle sendet die Strahlung in Form eines Strahlenfächers aus. Mit dieser aufgefächerten Strahlung kann ein bestimmter Abschnitt des Materials, vorzugsweise das Material insgesamt, abgedeckt werden. In der Linie des Strahlenfächers ist dann auch der Strahlendetektor angeordnet, um die aufgefächerte Strahlung aufnehmen zu können, nachdem sie durch das Material hindurchgetreten ist.

Mit der Strahlenquelle erfolgt somit eine Art Abscannen des Materials. Aufgefächerte Strahlung und Strahlendetektor sind dabei vorzugsweise quer zur Bewegungsrichtung des Materials bzw. der Strahlenquelle ausgerichtet. Regelmäßig wird das Material an der Strahlenquelle vorbeigeführt.

Weist das Material eine Breite auf, die größer ist als die aufgefächerte Strahlung einer Strahlenquelle ist, so kann das Material mit mehreren Strahlenquellen untersucht werden. Die einzelnen Strahlenquellen mit den jeweils zugeordneten Detektoren werden dann so angeordnet, daß die Gesamtbreite des Materials mit den aufgefächerten Strahlungen abgedeckt wird. Strahlenquellen und Strahlendetektoren werden dann in voneinander verschiedenen Ebenen angeordnet, die etwa rechtwinklig zur Erstreckung des Materials ausgerichtet sind. Jede Ebene kann mit nur einer Strahlenquelle und einem Strahlendetektor besetzt sein. Die gewonnenen detektierten Informationen werden anschließend zu einer Gesamtinformation über das Material zusammengesetzt.

Um zu erreichen, daß die von der Strahlenquelle ausgesandten Strahlen möglichst vertikal durch das Material hindurchtreten, hat der Strahlenfächer einen relativ spitzen Öffnungswinkel. Dieser beträgt vorzugsweise etwa 10° bis etwa 50°. Die Strahlenquelle kann vom Detektor mehrere Meter entfernt sein, um mit einem derart spitzen Strahlenfächer einen möglichst breiten Abschnitt des Materials überdecken zu können.

Die Strahlenquelle ist nach einer Weiterbildung der Erfindung an einem traversenartigen Hilfsgestell oberhalb einer Durchführungsebene für das Material angeordnet. Das Material wird an der Strahlenquelle vorbeigeführt, diese wird oberhalb des Materials durch das traversenartige Hilfsgestell gehalten. Die Durchführungsebene für das Material ist dabei vorzugsweise horizontal angeordnet, so daß ein von der Strahlenquelle ausgehender Strahlenfächer auf die flächige Seite des Materials gelangen kann.

Eine nächste Weiterbildung der Erfindung sieht vor, daß der Strahlendetektor in einer Halteeinrichtung am Hilfsgestell gehalten ist. Mit der Halteeinrichtung wird der Strahlendetektor einerseits gehalten, zum anderen ist durch den Einsatz einer Halteeinrichtung auch ein Auswechseln des Strahlendetektors ermöglicht. Um einen beschleunigten Zugriff auf den Strahlendetektor zu haben, ist die Halteeinrichtung vorzugsweise eine Schublade.

Die Ausbildung von Strahlenquelle und Strahlendetektor hängt von den zu untersuchenden Materialien ab. Handelt es sich um Folien oder Holzspanplatten, so können die Strahlenquelle, eine Röntgenquelle und der Strahlendetektor durch eine Vielzahl von Röntgenphotodioden ausgebildet sein.

Ein Ausführungsbeispiel der Erfindung, aus dem sich weitere erfinderische Merkmale ergeben, ist in der Zeichnung dargestellt. Es zeigen:
- Fig. 1:: eine Seitenansicht einer Vorrichtung zum Prüfen eines Materials und
- Fig. 2:: eine Draufsicht der Vorrichtung gemäß Fig. 1.

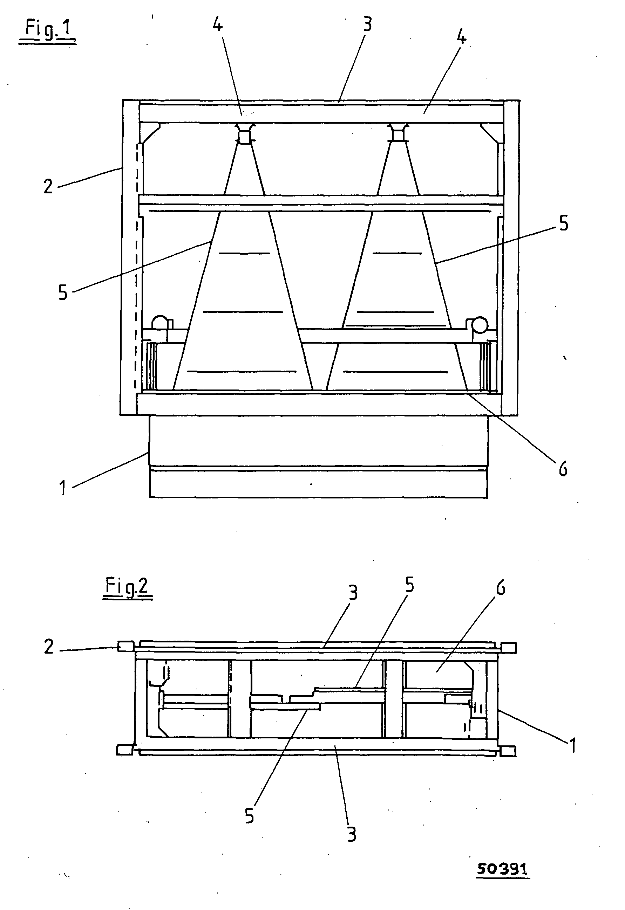

Die Vorrichtung in Fig. 1 weist ein Gestell 1 auf, das auf dem Boden aufstehen kann. Das Gestell ist teilweise als traversenartiges Hilfsgestell 2 ausgebildet.

An einem oben liegenden, horizontal verlaufenden Gestellbalken 3 sind zwei Strahlenquellen 4 angeordnet. Jeder Strahlenquelle 4 ist ein Gehäuse 5 zugeordnet, das unterhalb der Strahlenquelle 4 angeordnet ist und sich in Richtung eines von dem Gestell 1 gehaltenen Auflagetisches 6 konusartig verbreitert.

Der Auflagetisch 6 bildet eine Auflageebene für ein Plattenmaterial oder ein Folienmaterial aus, das aus der Zeichnungsebene der Fig. 1 hinausläuft. Das Material wird damit relativ zu den Strahlenquellen 4 mit ihren Gehäusen 5 bewegt.

Unmittelbar unterhalb des Auflagetisches 6 wird durch das Gestell 1 ein Bauraum ausgebildet, in dem nicht weiter dargestellte und den beiden Strahlenquellen 4 jeweils zugeordnete zeilenartige Strahlendetektoren angeordnet sind. Mit den Strahlendetektoren werden die jeweils von der Strahlenquelle 4 ausgesandte und durch das Gehäuse 5 dem auf dem Auflagetisch 6 aufliegenden Material zugeführte Strahlen nach deren Durchgang durch das Material aufgenommen und ausgelesen.

Fig. 2 zeigt, daß sich die Gehäuse 5 in einem Mittelbereich des Gestells 1 abschnittsweise überlappen. Der Überlappungsbereich ist jedoch gering ausgebildet, da die Meßergebnisse jeder Strahlenquelle 4 für sich ausgewertet werden. Mit beiden Strahlenquellen 4 und ihren zugeordneten Gehäusen 5 wird allerdings die gesamte Breite des Materials abgedeckt, aus den mit den beiden zugeordneten Strahlendetektoren ausgelesenen Ergebnissen läßt sich somit ein Abbild der gesamten Breite des Materials herstellen. Durch ein zeilenweises Auslesen des gesamten Materials und ein anschließendes Zusammensetzen der zeilenweise vorliegenden Ergebnisse läßt sich beispielsweise ein Grauwertbild des Materials anfertigen. In der dazu verwendeten Datenverarbeitungseinrichtung kann beispielsweise ein Ringspeicher enthalten sein, in dem eine Länge von etwa 50 m Material ablegbar sind und auch visuell darstellbar sind.

## Patentansprüche

1. Vorrichtung zum Prüfen eines flächigen Materials mit Hilfe zumindest einer Strahlenquelle, wobei sich Material und Strahlenquelle relativ zueinander bewegen und wobei der Strahlenquelle ein Strahlendetektor zugeordnet ist, und wobei die Strahlenquelle und der Strahlendetektor auf einander gegenüberliegenden Seiten bezüglich des Materials angeordnet sind, die Strahlenquelle eine Strahlung in Form eines Strahlenfächers aussendet und der Strahlendetektor zeilenförmig ausgebildet ist,
**dadurch gekennzeichnet,**
**daß** für den Strahlenfächer ein sich in Richtung des Strahlendetektors verbreiterndes Gehäuse (5) vorgesehen ist und daß das Gehäuse (5) mit einem für die Strahlung transparenten Gas gasdicht gefüllt ist.

2. Vorrichtung nach Anspruch 1, **dadurch gekennzeichnet, daß** das Gehäuse (5) mit Helium gefüllt ist.

3. Vorrichtung nach Anspruch 1 oder 2, **dadurch gekennzeichnet, daß** ein Eintritt und/oder ein Austritt des Gehäuses (5) versiegelt sind beziehungsweise ist.

4. Vorrichtung nach Anspruch 3, **dadurch gekennzeichnet, daß** das Versiegeln von Eintritt und/oder Austritt mit Folienmaterial erfolgt.

5. Vorrichtung nach einem der vorhergehenden Ansprüche, **dadurch gekennzeichnet, daß** der Strahlenfächer im Gehäuse (5) einen Öffnungswinkel von annähernd 10° bis annähernd 50° hat.

6. Vorrichtung nach einem der vorhergehenden Ansprüche, **dadurch gekennzeichnet, daß** die Strahlenquelle (4) an einem traversenartigen Hilfsgestell (2) oberhalb einer Durchführungsebene für das Plattenmaterial gehalten ist.

7. Vorrichtung nach einem der vorhergehenden Ansprüche, **dadurch gekennzeichnet, daß** jeweils zumindest eine Strahlenquelle (4) und zumindest ein Strahlendetektor in einer annähernd rechtwinklig zur Erstreckung des Materials ausgerichteten Ebene angeordnet sind, wobei für mehrere Strahlenquellen (4) und Strahlendetektoren mehrere Ebenen genutzt werden.

8. Vorrichtung nach einem der vorhergehenden Ansprüche, **dadurch gekennzeichnet, daß** der Strahlendetektor in einer Halteeinrichtung am Hilfsgestell (2) gehalten ist.

9. Vorrichtung nach Anspruch 8, **dadurch gekennzeichnet, daß** die Halteeinrichtung eine Schublade ist.

10. Vorrichtung nach einem der vorhergehenden Ansprüche, **dadurch gekennzeichnet, daß** die Strahlenquelle (4) eine Röntgenquelle ist.

11. Vorrichtung nach Anspruch 10, **dadurch gekennzeichnet, daß** der Strahlendetektor durch eine Vielzahl von Röntgenphotodioden ausgebildet ist.
